# EUROPÄISCHE PATENTANMELDUNG

(11) **EP 3 299 335 A1**
(43) Veröffentlichungstag der Anmeldung: **28.03.2018**
(21) Anmeldenummer: 17001506.9
(22) Anmeldetag: 07.09.2017
(51) Int. Cl.: C01B 3/38

(54) **VERFAHREN UND VORRICHTUNG ZUR DAMPFREFORMIERUNG**

(30) Priorität: 27.09.2016 DE 102016011657
(71) Anmelder: Linde Aktiengesellschaft, 80331 München (DE)
(72) Erfinder: Maximilian, Jarosch, 81827 München (DE)
(74) Vertreter: Fischer, Werner

(57) **Zusammenfassung**

Die Erfindung betrifft ein Verfahren sowie eine Vorrichtung zur Erzeugung eines Wasserstoff und/oder Kohlenmonoxid umfassenden Gasproduktes (21), wobei ein aus einem Kohlenwasserstoffe enthaltenden Ausgangsstoff (1) gebildeter Kohlenwasserstoffeinsatz (5) gemeinsam mit überhitztem Dampf (13) einer bei erhöhtem Druck ablaufenden Dampfreformierung (D) zugeführt wird, um ein Wasserstoff und Kohlenmonoxid enthaltendes Syntheserohgas (17) zu erhalten, aus dem das Gasprodukt (21) gewonnen wird. Kennzeichnend hierbei ist, dass Kesselspeisewasser (8) bei einem höheren als seinem kritischen Druck Wärme zugeführt wird (E1), um überkritisches Wasser (10) zu erhalten, von dem nachfolgend zumindest eine Teilmenge (12) als Treibmedium in einer Dampfstrahlpumpe (V) eingesetzt wird, mit deren Hilfe der Kohlenwasserstoffeinsatz (5) und/oder ein zu dessen Bildung eingesetzter Stoff verdichtet wird.

## Beschreibung

Die Erfindung betrifft ein Verfahren zur Erzeugung eines Wasserstoff und/oder Kohlenmonoxid umfassenden Gasproduktes, wobei ein aus einem Kohlenwasserstoffe enthaltenden Ausgangsstoff gebildeter Kohlenwasserstoffeinsatz gemeinsam mit überhitztem Dampf einer bei erhöhtem Druck ablaufenden Dampfreformierung zugeführt wird, um ein Wasserstoff und Kohlenmonoxid enthaltendes Syntheserohgas zu erhalten, aus dem das Gasprodukt gewonnen wird.

Weiterhin betrifft die Erfindung eine Vorrichtung zur Durchführung des erfindungsgemäßen Verfahrens.

Die Dampfreformierung ist das am weitesten verbreitete Verfahren zur industriellen Erzeugung von wasserstoffreichem Synthesegas aus leichten Kohlenwasserstoffen. Hierbei werden Kohlenwasserstoffe enthaltende Ausgangsstoffe (beispielsweise Erdgas, Flüssiggas oder Naphtha) durch Abtrennung unerwünschter Stoffe wie Schwefel sowie evtl. durch Zumischung von innerhalb des Prozesses zurückgeführter Stoffströme zu einem Einsatz (Kohlenwasserstoffeinsatz) aufbereitet, der gemeinsam mit Prozessdampf durch im Feuerraum eines Dampfreformers angeordnete Reformerrohre geleitet wird. In den Reformerrohren, deren innere Oberflächen katalytisch aktiv sind oder die ganz oder zumindest teilweise im Bereich des Feuerraums mit einer Schüttung aus einem geeigneten Katalysatormaterial oder einer katalytisch aktiven strukturierten Packung gefüllt sind, entsteht in einer endothermen Reformierungsreaktion ein wasserstoffreiches, Kohlenmonoxid enthaltendes Syntheserohgas, aus dem in nachfolgenden Verfahrensschritten ein Wasserstoff und/oder Kohlenmonoxid umfassendes Gasprodukt wie beispielsweise Reinwasserstoff erhalten wird.

Die für die Reformierungsreaktion benötigte Energie wird gewöhnlich über Brenner bereitgestellt, die ihre heißen Rauchgase in den Feuerraum entlassen. Durch Strahlung und Konvektion übertragen die Rauchgase einen Teil der in ihnen enthaltenen Wärme auf die Reformerrohre, bevor sie zwar abgekühlt, jedoch immer noch heiß über einen Rauchgaskanal abgezogen werden, in dem ein aus mehreren Wärmetauschern bestehendes Abhitzesystem angeordnet ist. Über die Wärmetauscher wird den Rauchgasen weiter Wärme entzogen und z. B. für die Vorwärmung der Ausgangsstoffe oder zur Erzeugung von Prozessdampf genutzt, so dass sie lediglich eine Temperatur zwischen 120 und 200°C aufweisen, wenn sie schließlich über einen Kamin in die Atmosphäre entlassen werden.

Als Prozessdampf wird üblicherweise überhitzter Dampf eingesetzt, zu dessen Erzeugung nach dem Stand der Technik zunächst Kesselspeisewasser in eine Dampftrommel gepumpt wird. Aus der Dampftrommel strömt vorgewärmtes Wasser durch Wirkung der Schwerkraft nach unten zu einem im Rauchgaskanal des Dampfreformers angeordneten ersten Wärmetauscher und wird dort gegen abzukühlendes Rauchgas teilweise verdampft. Aufgrund seiner geringeren Dichte steigt das im ersten Wärmetauscher gebildete Flüssigkeits/Dampf-Gemisch nach oben und gelangt zurück in die Dampftrommel, in der eine Trennung in flüssiges Wasser und Sattdampf erfolgt, der beispielsweise mit einem Druck von ca. 48bar(a) und einer Temperatur von 260°C vorliegt. Der Sattdampf wird zu einem ebenfalls im Rauchgaskanal des Dampfreformers, jedoch stromaufwärts des ersten angeordneten zweiten Wärmetauscher weitergeleitet, aus dem überhitzter Dampf als Prozessdampf abgezogen werden kann.

Die Dampftrommel kann auch mit einem als PGC (von englisch Process Gas Cooler) bezeichneten Abhitzekessel verbunden sein, in dem Kesselspeisewasser gegen heiß aus den Reformerrohren abströmendes Syntheserohgas teilweise verdampft wird.

Die Dampftrommel stellt einen beträchtlichen Kostenfaktor dar, da sie als Druckbehälter ausgeführt sein muss, der aufwendig in Auslegung, Herstellung und Überwachung ist. Die erforderliche Positionierung der Dampftrommel oberhalb des Rauchgaskanals des Dampfreformers macht eine stabile Gerüstkonstruktion erforderlich, deren Kosten ebenfalls der Dampftrommel zuzurechnen sind.

Der Kohlenwasserstoffe enthaltende Ausgangsstoff liegt häufig mit einem Druck vor, der für eine direkte Zuführung zum Dampfreformer nicht ausreicht. In einem solchen Fall wird nach dem Stand der Technik ein mechanischer Kompressor eingesetzt, um den Druck des Ausgangsstoffes anzuheben.

Im Kohlenwasserstoffe enthaltenden Ausgangsstoff vorliegender Schwefel stellt für den zur Dampfreformierung eingesetzten Katalysator ein Gift dar, weshalb der Ausgangsstoff durch die Abtrennung des Schwefels aufbereitet werden muss. Hierzu wird der Schwefel zu Schwefelwasserstoff hydriert, der nachfolgend adsorptiv entfernt wird. Für die Hydrierung wird in der Regel aus dem Syntheserohgas abgetrennter Wasserstoff zurückgeführt und dem Kohlenwasserstoffe enthaltenden Ausgangsstoff stromaufwärts des für die Hydrierung eingesetzten Reaktors zugemischt. Liegt der Ausgangsstoff bei einem höheren Druck als der zurückgeführte Wasserstoff vor, so muss der rückgeführte Stoffstrom verdichtet werden, wozu nach dem Stand der Technik ebenfalls ein mechanischer Kompressor eingesetzt wird.

Mechanische Kompressoren sind teuer in Anschaffung und Betrieb. Da sie darüber hinaus auch eine vergleichsweise hohe Ausfallwahrscheinlichkeit aufweisen und daher redundant ausgeführt sind, haben sie einen deutlich negativen Einfluss auf die Wirtschaftlichkeit einer Dampfreformierung.

Aufgabe der vorliegenden Erfindung ist es, ein Verfahren sowie eine Vorrichtung der gattungsgemäßen Art anzugeben, durch welche die Nachteile des Standes der Technik überwunden werden, um so die Wirtschaftlichkeit der Dampfreformierung zu verbessern.

Diese Aufgabe wird dadurch gelöst, dass Kesselspeisewasser bei einem höheren als seinem kritischen Druck Wärme zugeführt wird, um überkritisches Wasser zu erhalten, von dem nachfolgend zumindest eine Teilmenge als Treibmedium in einer Dampfstrahlpumpe eingesetzt wird, mit deren Hilfe der Kohlenwasserstoffeinsatz und/oder ein zu dessen Bildung eingesetzter Stoff verdichtet wird.

Durch das vorgeschlagene Verfahren ist es möglich, zur Verdichtung des Kohlenwasserstoffeinsatzes und/oder eines zu dessen Bildung eingesetzten Stoffes, bei dem es sich beispielsweise um zurückgeführten Wasserstoff handelt, völlig auf störanfällige, teure und zumeist redundant ausgeführte Maschinen zu verzichten. Dampfstrahlpumpen sind seit vielen Jahren Stand der Technik und dem Fachmann bekannt. Sie weisen einen relativ einfachen Aufbau ohne bewegliche Teile auf und sind robust, so dass sie zu deutlich geringeren Kosten eingesetzt werden können, als die nach dem Stand der Technik verwendeten mechanischen Kompressoren.

Der als Treibmedium eingesetzte Teil des überkritischen Wassers wird entweder über ein stromaufwärts der Dampfstrahlpumpe angeordnetes Drosselorgan oder in der Treibdüse der Dampfstrahlpumpe zu überhitztem Dampf entspannt, dessen Druckenergie in Geschwindigkeitsenergie umgewandelt wird. Die Dampfstrahlpumpe ist zweckmäßigerweise so ausgelegt und wird so betrieben, dass der überhitzte Dampf stromabwärts der Treibdüse einen statischen Druck aufweist, der geringer ist, als der Ansaugdruck des Kohlenwasserstoffeinsatzes bzw. des zur Bildung des Kohlenwasserstoffeinsatzes eingesetzten Stoffs, die daher angesaugt und durch den aus der Treibdüse austretenden Dampfstrahl beschleunigt werden. In dem sich an die Treibdüse anschließenden Einlaufkonus des Diffusors mischen sich der Dampf und die angesaugten Stoffe, bevor sie im Diffusor wieder abgebremst werden. Da durch die Abbremsung Druckenergie zurückgewonnen wird, verlassen die angesaugten Stoffe die Dampfstrahlpumpe zusammen mit dem überhitzten Dampf mit einem höheren als ihrem Ansaugdruck.

Vorzugsweise werden Druck, Temperatur und Massenstrom des als Treibmittel eingesetzten überkritischen Wassers so gewählt, dass bei der Verdichtung des Kohlenwasserstoffeinsatzes in der Dampfstrahlpumpe ein Stoffgemisch gebildet wird, das den Anforderungen der Dampfreformierung aufgrund seiner Zusammensetzung genügt und/oder das einen Druck aufweist, der eine Zuführung zur Dampfreformierung ohne weitere Verdichtung erlaubt.

Zur Erzeugung des überkritischen Wassers kann ein erster Teil des Kesselspeisewassers gegen ein heißes Rauchgas aufgeheizt werden, das etwa aus dem Feuerraum des zur Dampfreformierung eingesetzten Dampfreformers zugeführt wird, wo es bereits einen Teil seiner fühlbaren Wärme für die in den dort angeordneten Reformerrohren ablaufende endotherme Reformierungsreaktion abgegeben hat, während ein zweiter Teil des Kesselspeisewassers gegen heiß aus dem Dampfreformer abströmendes Syntheserohgas aufgeheizt wird. Vorzugsweise wird jedoch das gesamte Kesselspeisewasser im Wärmetausch mit heiß aus dem Dampfreformer abströmendem Rauchgas aufgeheizt. In diesem Fall wird sinnvollerweise die Wärme des heißen Syntheserohgases dazu verwendet, um die Verbrennungsluft für im Dampfreformer eingesetzte Brenner vorzuwärmen und/oder das bei der Verdichtung in der Dampfstrahlpumpe erhaltene Stoffgemisch zu überhitzen, ehe es der Dampfreformierung zugeführt wird. Eine Überhitzung des in der Dampfstrahlpumpe erhaltenen Stoffgemisches ist alternativ oder zusätzlich auch gegen ein heißes Rauchgas möglich, bei dem es sich bevorzugt um ein aus dem Feuerraum des zur Dampfreformierung eingesetzten Dampfreformers abströmendes Rauchgas handelt, das nachfolgend für die Erzeugung des überkritischen Wassers verwendet wird.

Die für die Erzeugung des überkritischen Wassers eingesetzten Anlagenkomponenten verursachen vergleichsweise hohe Kosten, da sie aus hochlegierten Spezialstählen gefertigt sein müssen, um den im Betrieb auftretenden staken Beanspruchungen zu genügen, die insbesondere mit dem maximalen Druck des überkritischen Wassers zunehmen. Um die Kosten der Dampfreformierung zu begrenzen, wird vorgeschlagen, das überkritische Wasser mit einem Druck zu erzeugen, der nicht mehr als 20 bar höher als der bei ca. 220bar(a) liegende kritische Druck des Kesselspeisewassers ist.

Unter Umständen kann für die Erzeugung des überkritischen Wassers mehr Wärme auf einem geeigneten Temperaturniveau zur Verfügung stehen, als für die Herstellung des überhitzten, als Prozessdampf eingesetzten Dampfes benötigt wird. In diesem Fall sieht eine Variante des erfindungsgemäßen Verfahrens vor, die gesamte zur Verfügung stehende Wärmemenge zur Erzeugung von überkritischem Wasser einzusetzen und den nicht für die Bereitstellung von Prozessdampf benötigten Teil zu exportieren, um ihn zur Stromerzeugung und/oder zu Heizzwecken und/oder zur Durchführung chemischer Reaktionen und/oder als Extraktionsmittel und/oder zur Vernichtung toxischer Stoffe zu verwenden. Eine weitere Ausgestaltung des erfindungsgemäßen Verfahrens sieht vor, dass der für den Export bestimmte Teil des überkritischen Wassers höher als der für die Prozessdampfgewinnung vorgesehene Teil aufgeheizt wird, wozu bevorzugt Rauchgas aus dem Feuerraum des Dampfreformers oder heißes Syntheserohgas eingesetzt wird.

Das erfindungsgemäße Verfahren kann dazu verwendet werden, um aus einer Vielzahl von Kohlenwasserstoffe enthaltenden Ausgangsstoffen wie Erdgas, Flüssiggas oder Naphtha ein Kohlenmonoxid und/oder Wasserstoff umfassendes Gasprodukt durch Dampfreformierung zu erhalten.

Weiterhin betrifft die Erfindung eine Vorrichtung zur Erzeugung eines Wasserstoff und/oder Kohlenmonoxid umfassenden Gasproduktes aus einem Kohlenwasserstoffeinsatz, der aus einem Kohlenwasserstoffe enthaltenden Ausgangsstoff gebildet wird, mit einem Dampfreformer sowie einem System zur Prozessdampferzeugung aus Kesselspeisewasser.

Die gestellte Aufgabe wird dadurch gelöst, dass das System zur Prozessdampferzeugung einen im überkritischen Bereich betreibbaren Zwangsdurchlaufkessel umfasst, dessen Überhitzer mit einer Dampfstrahlpumpe verbunden ist, so dass im Überhitzer erzeugbares überkritisches Wasser als Treibmittel in der Dampfstrahlpumpe zur Verdichtung des Kohlenwasserstoffeinsatzes und/oder eines zu dessen Bildung eingesetzten Stoffs verwendet werden kann.

Bevorzugt weist der Dampfreformer einen brennerbefeuerten Feuerraum mit darin angeordneten Reformerrohren sowie einen Rauchgaskanal auf, über den abgekühlte, jedoch immer noch heiße Rauchgase aus dem Feuerraum abgezogen werden können. Zweckmäßigerweise ist der Zwangsdurchlaufkessel im Rauchgaskanal des Dampfreformers angeordnet, so dass die Wärme der aus dem Feuerraum abgezogenen Rauchgase zur Erzeugung des überkritischen Wassers nutzbar ist.

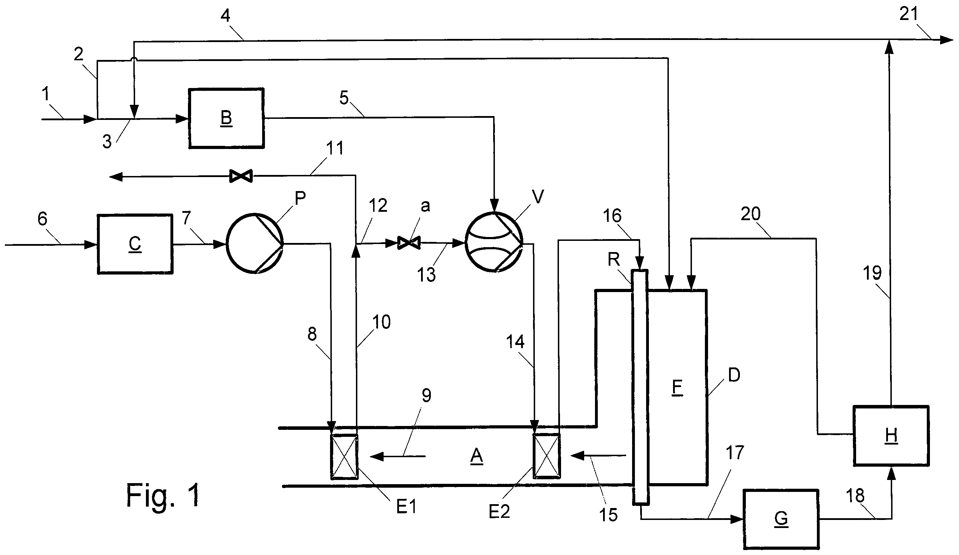

Im Folgenden soll die Erfindung anhand eines in der **Figur 1** schematisch dargestellten Ausführungsbeispiels näher erläutert werden.

Die Figur 1 zeigt eine Anlage, in der aus einem Kohlenwasserstoffe enthaltenden Ausgangsstoff durch Dampfreformierung Reinwasserstoff als Gasprodukt gewonnen wird.

Ein Kohlenwasserstoffe enthaltender Ausgangsstoff 1, bei dem es sich beispielsweise um Erdgas, verdampftes Flüssiggas oder Naphtha handelt, wird in einen ersten 2 und einen zweiten Teilstrom 3 getrennt. Während der erste Teilstrom 2 als Brennstoff dem Dampfreformer D zur Beheizung des Feuerraums F zugeführt wird, wird der zweite Teilstrom 3 mit zurückgeführtem Wasserstoff 4 gemischt und in die Behandlungseinrichtung B eingeleitet, um Stoffe wie Schwefelverbindungen abzutrennen, die in den stromabwärts gelegenen Anlagenteilen zu Störungen führen würden, und einen Kohlenwasserstoffeinsatz 5 für den Dampfreformer D zu liefern. Da der Druck des Kohlenwasserstoffeinsatzes 5 für eine direkte Einleitung in den bei ca. 20-30bar(a) betriebenen Dampfreformer D zu gering ist, wird er zur Druckerhöhung der Dampfstrahlpumpe V zugeführt.

Zur Erzeugung von Prozessdampf wird entmineralisiertes Wasser 6 in die Aufbereitungseinrichtung C geleitet, um entgast und zu Kesselspeisewasser 7 aufbereitet zu werden. Das unter leichtem Überdruck stehende Kesselspeisewasser 7 wird anschließend mit Hilfe der Kesselspeisewasserpumpe P auf einen um bis zu 20 bar über seinem kritischen Druck liegenden Druck gebracht und über Leitung 8 dem im Rauchgaskanal A des Dampfreformers D angeordneten Wärmetauscher E1 zugeführt, wo in indirektem Wärmetausch mit heißem Rauchgas 9 überkritisches Wasser 10 entsteht. Ein Teil 11 des überkritischen Wassers 10 wird exportiert und kann beispielsweise zur Stromerzeugung in einer Dampfturbine (nicht dargestellt) genutzt werden. Der Rest 12 des überkritischen Wassers 10 wird dagegen über das Drosselorgan a entspannt, wobei überhitzter Dampf 13 entsteht, der in der Dampfstrahlpumpe V als Treibmedium eingesetzt wird, um den Kohlenwasserstoffeinsatz 5 auf den für die Dampfreformierung erforderlichen Druck zu bringen und ihn gleichzeitig mit dem als Prozessdampf dienenden Treibmedium intensiv zu vermischen. Das überkritische Wasser 10 wird dabei vorzugsweise mit einem Druck und einer Temperatur erzeugt, die es ermöglichen, den überhitzten Dampf 13 mit der gesamten für die Dampfreformierung benötigten Prozessdampfmenge der Dampfstrahlpumpe P zuzuführen, so dass der die Dampfstrahlpumpe V verlassende Stoffstrom 14 ohne eine weitere Änderung seiner Zusammensetzung und lediglich nach Überhitzung gegen heißes Rauchgas 15 in dem stromaufwärts des ersten E1 angeordneten zweiten Wärmetauscher E2 als überhitzter Einsatz 16 in die Reformerrohre R des Dampfreformers D eingeleitet werden kann.

Aus dem in den Reformerrohren R durch Dampfreformierung erzeugten wasserstoffreichen Syntheserohgas 17 wird in der Reinigungseinrichtung G durch die Abtrennung insbesondere von Wasser und Kohlendioxid ein weitgehend aus Wasserstoff und Kohlenmonoxid bestehendes Synthesegas 18 erzeugt, das im Druckwechseladsorber W in Reinwasserstoff 19 und ein vorwiegend aus Kohlenmonoxid bestehendes Restgas 20 zerlegt wird. Während das Restgas 20 im Feuerraum F des Dampfreformers D verbrannt wird, um Energie für die Reformierungsreaktion zu liefern, wird der größere Teil des Reinwasserstoffs 19 als Gasprodukt 21 abgegeben und der kleinere Teil 4 vor die Behandlungseinrichtung B in den zweiten Teilstrom 3 des Ausgangstoffs 1 zurückgeführt.

## Patentansprüche

1. Verfahren zur Erzeugung eines Wasserstoff und/oder Kohlenmonoxid umfassenden Gasproduktes (21), wobei ein aus einem Kohlenwasserstoffe enthaltenden Ausgangsstoff (1) gebildeter Kohlenwasserstoffeinsatz (5) gemeinsam mit überhitztem Dampf (13) einer bei erhöhtem Druck ablaufenden Dampfreformierung (D) zugeführt wird, um ein Wasserstoff und Kohlenmonoxid enthaltendes Syntheserohgas (17) zu erhalten, aus dem das Gasprodukt (21) gewonnen wird, **dadurch gekennzeichnet, dass** Kesselspeisewasser (8) bei einem höheren als seinem kritischen Druck Wärme zugeführt wird (E1), um überkritisches Wasser (10) zu erhalten, von dem nachfolgend zumindest eine Teilmenge (12) als Treibmedium in einer Dampfstrahlpumpe (V) eingesetzt wird, mit deren Hilfe der Kohlenwasserstoffeinsatz (5) und/oder ein zu dessen Bildung eingesetzter Stoff verdichtet wird.

2. Verfahren nach Anspruch 1, **dadurch gekennzeichnet, dass** bei der Verdichtung des Kohlenwasserstoffeinsatzes (5) in der Dampfstrahlpumpe (V) ein Stoffgemisch (14) gebildet wird, das den Anforderungen der Dampfreformierung (D) aufgrund seiner Zusammensetzung genügt und/oder das einen Druck aufweist, der eine Zuführung zur Dampfreformierung (D) ohne weitere Verdichtung erlaubt.

3. Verfahren nach einem der Ansprüche 1 oder 2, **dadurch gekennzeichnet, dass** das Kesselspeisewasser (8) in indirektem Wärmetausch gegen Rauchgas (9) aufgeheizt wird, dem zuvor Wärme für die Dampfreformierung (D) entzogen wird.

4. Verfahren nach einem der Ansprüche 1 bis 3, **dadurch gekennzeichnet, dass** das bei der Verdichtung des Kohlenwasserstoffeinsatzes (5) in der Dampfstrahlpumpe (V) gebildete Stoffgemisch (14) in indirektem Wärmetausch gegen Rauchgas (15) aufgeheizt wird, dem zuvor Wärme für die Dampfreformierungsreaktion (D) entzogen wird.

5. Verfahren nach einem der Ansprüche 1 bis 4, **dadurch gekennzeichnet, dass** überkritisches Wasser (10) mit einem Druck erzeugt wird, der nicht mehr als 20bar höher ist, als der kritische Druck des Kesselspeisewassers (8).

6. Verfahren nach einem der Ansprüche 1 bis 5, **dadurch gekennzeichnet, dass** ein nicht als Treibmittel (13) für die Dampfstrahlpumpe (V) benötigter Teil (11) des überkritischen Wassers (10) exportiert und zur Erzeugung elektrischen Stroms und/oder zu Heizzwecken und/oder zur Durchführung chemischer Reaktionen und/oder als Extraktionsmittel und/oder zur Vernichtung toxischer Stoffe verwendet wird.

7. Verfahren nach Anspruch 6, **dadurch gekennzeichnet, dass** der nicht als Treibmedium für eine Dampfstrahlpumpe (V) benötigte Teil (11) des überkritischen Wassers (10) vor seinem Export gegen abzukühlendes Rauchgas weiter aufgeheizt wird.

8. Verfahren nach einem der Ansprüche 1 bis 7, **dadurch gekennzeichnet, dass** Erdgas oder verdampftes Flüssiggas oder verdampftes Naphtha als Kohlenwasserstoffe enthaltender Ausgangsstoff (1) verwendet wird.

9. Vorrichtung zur Erzeugung eines Wasserstoff und/oder Kohlenmonoxid umfassenden Gasproduktes (21) aus einem Kohlenwasserstoffeinsatz (5), der aus einem Kohlenwasserstoffe enthaltenden Ausgangsstoff (1) gebildet wird, mit einem Dampfreformer (D) sowie einem System zur Prozessdampferzeugung (E1) aus Kesselspeisewasser (8), **dadurch gekennzeichnet, dass** das System zur Prozessdampferzeugung einen im überkritischen Bereich betreibbaren Zwangsdurchlaufkessel (E1) umfasst, dessen Überhitzer über ein Drosselorgan (a) mit einer Dampfstrahlpumpe (V) verbunden ist, so dass im Überhitzer erzeugbares überkritisches Wasser (12) als Treibmittel in der Dampfstrahlpumpe (V) zur Verdichtung des Kohlenwasserstoffeinsatzes (5) und/oder eines zu dessen Bildung eingesetzten Stoffs verwendet werden kann.

10. Vorrichtung nach Anspruch 9, **dadurch gekennzeichnet, dass** der Zwangsdurchlaufkessel (E1) im Rauchgaskanal (A) des Dampfreformers (D) angeordnet ist.
